# FASCICULE DE BREVET EUROPEEN

(11) **EP 3 493 965 B1**
(45) Date de publication et mention de la délivrance du brevet: **04.05.2022**
(21) Numéro de dépôt: 17754427.7
(22) Date de dépôt: 03.08.2017
(51) Int. Cl.: B29C 45/00, C08G 63/199, C08G 63/672, B29K 67/00, B29K 105/00

(54) **UTILISATION D'UN POLYESTER THERMOPLASTIQUE POUR LA FABRICATION DE PIECES INJECTEES**
VERWENDUNG EINES THERMOPLASTISCHEN POLYESTER ZUR HERSTELLUNG VON SRITZGEGOSSENEN TEILEN
USE OF A THERMOPLASTIC POLYESTER FOR PRODUCING INJECTED PARTS

(30) Priorité: 05.08.2016 FR 1657615
(43) Date de publication de la demande: 12.06.2019
(73) Titulaire: Roquette Frères, 62136 Lestrem (FR)
(72) Inventeur: AMEDRO, Hélène, 62400 Bethune (FR); SAINT-LOUP, René, 59160 Lomme (FR)
(74) Mandataire: Plasseraud IP
(86) Numéro de dépôt international: PCT/FR2017/052181
(87) Numéro de publication internationale: WO 2018/024995

(56) Documents cités:
- EP-A1- 1 147 249
- EP-A1- 2 781 552
- EP-A1- 2 837 581
- EP-A2- 2 520 444
- EP-B1- 1 112 174
- WO-A1-2017/212192
- WO-A1-2018/020193
- WO-A1-2018/024987
- WO-A1-2018/024988
- US-A1- 2004 092 703

## Description

### Domaine de l'invention

La présente invention se rapporte au domaine des objets plastiques et concerne notamment l'utilisation d'un polyester thermoplastique pour la fabrication de pièces injectées, ledit polyester thermoplastique présentant des propriétés particulièrement intéressantes pour cette application.

### Arrière-plan technologique de l'invention

Les matières plastiques sont devenues incontournables pour la fabrication en série d'objets. En effet, leur caractère thermoplastique permet à ces matières d'être transformées à cadence élevée en toutes sortes d'objets.

Certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de films.

Toutefois, pour certaines applications ou dans certaines conditions d'utilisation, il est nécessaire d'améliorer certaines propriétés et notamment la résistance au choc ou encore de tenue thermique. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon.

Un problème de ces PEIT est qu'ils peuvent présenter des propriétés insuffisantes de résistance au choc. De plus, la température de transition vitreuse peut être insuffisante pour la fabrication de certains objets plastiques.

Pour améliorer les propriétés de résistance au choc des polyesters, il est connu de l'art antérieur d'utiliser des polyesters dont on a réduit la cristallinité. En ce qui concerne les polyesters à base d'isosorbide, on peut citer la demande US2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées. Comme indiqué dans la partie introductive de cette demande, il s'agit d'obtenir des polymères dont on élimine la cristallinité par l'ajout de comonomères, et donc ici par l'ajout de 1,4-cyclohexanediméthanol. Dans la partie exemples est décrite la fabrication de différents poly(ethylène-co-1,4-cyclohexanediméthylène-coisosorbide) téréphtalates (PECIT) ainsi qu'également un exemple de poly(1,4-cyclohexanediméthylène-co-isosorbide) téréphtalate (PCIT).

On peut également noter que, tandis que les polymères de type PECIT ont fait l'objet de développements commerciaux, ce n'est pas le cas des PCIT. En effet leur fabrication était jusqu'ici considérée comme complexe, l'isosorbide présentant une faible réactivité comme diol secondaire. Yoon et al. (Synthesis and Characteristics of a Biobased High-Tg Terpolyester of Isosorbide, Ethylene Glycol, and 1,4-Cyclohexane Dimethanol: Effect of Ethylene Glycol as a Chain Linker on Polymerization, Macromolecules, 2013, 46, 7219-7231*)* ont ainsi montré que la synthèse de PCIT est bien plus difficile à réaliser que celle de PECIT. Ce document décrit l'étude de l'influence du taux d'éthylène glycol sur la cinétique de fabrication de PECIT.

Dans *Yoon et al.,* un PCIT amorphe (qui comprend par rapport à la somme des diols environ 29% d'isosorbide et 71% de CHDM), est fabriqué afin de comparer sa synthèse et ses propriétés avec celles des polymères de type PECIT. L'utilisation de températures élevées lors de la synthèse induit une dégradation thermique du polymère formé si on se réfère au premier paragraphe de la partie *Synthesis* de la page 7222, cette dégradation étant notamment liée à la présence des diols aliphatiques cycliques tels que l'isosorbide. De ce fait, *Yoon et al.* ont utilisé un procédé dans lequel la température de polycondensation est limitée à 270°C. Yoon et al. ont constaté que, même en augmentant le temps de polymérisation, le procédé ne permet pas non plus d'obtenir un polyester présentant une viscosité suffisante. Ainsi, sans ajout d'éthylène glycol, la viscosité du polyester reste limitée, ceci malgré l'utilisation de temps de synthèse prolongés.

Ainsi, malgré les modifications apportées aux PET, il existe toujours un besoin constant de nouveaux polyesters présentant des propriétés améliorées.

Dans le domaine des matières plastiques et notamment pour la fabrication de pièces injectées, il est nécessaire de disposer de polyesters thermoplastiques qui permettent d'obtenir des pièces injectées aux propriétés thermiques et mécaniques améliorées.

Ainsi, il existe encore à ce jour le besoin de disposer de polyesters thermoplastiques pour la fabrication de pièces injectées, lesdits polyesters permettant d'obtenir des pièces injectées ayant des propriétés mécaniques améliorées et thermiques augmentées.

Le document EP 2 520 444 porte sur un produit moulé incluant un élément décoratif laminé sur une feuille de résine de polyester. La résine de polyester présente une structure alternative de motifs acides et de motifs diols, les motifs acides comprenant de l'acide téréphtalique et les motifs diols comprenant de 5 à 99% de cyclohexanedimethanol (B) et de 1 à 60% d'isosorbide (A) par rapport à la quantité totale de diol dans le polyester. Les exemples 2 et 6 de ce document décrivent respectivement une résine de polyester ayant un ratio molaire (A)/[(A)+(B)] de 0,09 et 0,42. Concernant les quantités de motifs diols aliphatique non cyclique, la résine de polyester de l'exemple 2 en est exempte, alors que la résine de polyester de l'exemple 6 en contient une quantité de 2,5% par rapport à la totalité des motifs monomériques du polyester.

Le document US 2004/092703 quant à lui porte sur un procédé de fabrication d'un polyester à base d'isosorbide et d'éthylène glycol. Le document EP 2 781 552 a trait à un mélange d'une résine d'acide polylactique et d'une résine de copolyester, cette dernière étant à base d'isosorbide et d'éthylène glycol, également.

Il est donc du mérite de la Demanderesse d'avoir trouvé que cet objectif pouvait, contre toute attente, être atteint avec un nouveau polyester thermoplastique à base d'isosorbide ne présentant pas d'éthylène glycol alors qu'il était connu jusqu'à présent que ce dernier était indispensable pour l'incorporation dudit l'isosorbide. En effet, le polyester thermoplastique utilisé selon la présente invention, grâce à une viscosité et un ratio en motif particuliers, présente des propriétés améliorées pour une utilisation selon l'invention dans la fabrication de pièces injectées, élargissant ainsi les domaines d'application desdites pièces injectées.

Le document WO 2018/020193 opposable au titre de l'article 54(3) CBE porte sur une composition de polymères formée d'un mélange d'un polyester thermoplastique et d'un autre polymère supplémentaire. Ce mélange est ensuite employé lors d'un procédé d'injection. Le polyester thermoplastique n'est pas employé seul lors dudit procédé, et comprend un polymère supplémentaire choisi parmi les polyesters aromatiques, les polyesters aliphatiques, les polyesters éthers, les polyamides, les polycarbonates, les polyéthers bloc amide et les polyuréthanes.

Les documents, WO 2018/024987, WO 2018/024988 et WO 2017/212192 opposables au titre de l'article 54(3) CBE portent sur l'utilisation des polyesters thermoplastiques pour la fabrication de contenants d'aérosol ou de corps creux, les pièces obtenues par injection correspondant à des préformes, et non pas aux pièces finales.

### Résumé de l'invention

L'invention a ainsi pour objet l'utilisation d'un polyester thermoplastique pour la fabrication de pièces injectées, selon la revendication 1, ledit polyester comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
dans lequel le ratio (A)/[ (A)+(B)] étant d'au moins 0,05 et d'au plus 0,75 ; ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g.

Un second objet de l'invention concerne un procédé de fabrication de pièces injectées selon la revendication 11, à partir du polyester thermoplastique décrit ci-dessus.

Enfin, un troisième objet concerne une pièce injectée selon la revendication 6, comprenant le polyester thermoplastique précédemment décrit.

### Description détaillée de l'invention

Un premier objet de l'invention concerne ainsi l'utilisation d'un polyester thermoplastique pour la fabrication de pièces injectées, ledit polyester comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
dans lequel le ratio molaire (A)/[(A)+(B)] étant d'au moins 0,05 et d'au plus 0,75 et la viscosité réduite en solution supérieure à 50 mL/g.

Par « ratio molaire (A)/[(A)+(B)] » on entend le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A).

Le polyester thermoplastique est exempt de motifs diol aliphatiques non cycliques.

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

Le polyester est exempt de motif diol aliphatique non cyclique et plus préférentiellement, il est exempt d'éthylène glycol.

Malgré l'absence de diol aliphatique non cyclique, et donc d'éthylène glycol, utilisé pour la synthèse, il est obtenu de manière surprenante un polyester thermoplastique présentant une viscosité réduite en solution élevée et dans lequel l'isosorbide est particulièrement bien incorporé. Sans être lié par une quelconque théorie, ceci s'expliquerait par le fait que la cinétique de réaction de l'éthylène glycol est beaucoup plus élevée que celle du 1,4 : 3,6-dianhydrohexitol ce qui limite fortement l'intégration de ce dernier dans le polyester. Les polyesters en résultant présentent donc un faible taux d'intégration de 1,4 : 3,6-dianhydrohexitol et par conséquent une température de transition vitreuse relativement basse.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB^{®} P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. Très préférentiellement le diol alicyclique (B) est le 1,4-cyclohexanedimethanol. Le diol alicyclique (B) peut être dans la configuration *cis*, dans la configuration *trans* ou peut être un mélange de diols en configuration *cis* et *trans.*

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A), soit (A)/[(A)+(B)], est d'au moins 0,10 et d'au plus 0,75. Lorsque le ratio molaire (A)/[(A)+(B)] est inférieur à 0,30, le polyester thermoplastique est semi-cristallin et se caractérise par la présence d'une phase cristalline se traduisant par la présence de raie de diffraction aux rayons X et la présence d'un pic de fusion endothermique en analyse calorimétrique différentielle à balayage (DSC).

Par contre, lorsque le ratio molaire (A)/[(A)+(B)] est supérieur à 0,30, le polyester thermoplastique est amorphe et se caractérise par une absence de raies de diffraction aux rayons X et par une absence d'un pic de fusion endothermique en analyse calorimétrique différentielle à balayage (DSC).

Un polyester thermoplastique particulièrement adapté pour la fabrication de pièces injectées comprend:
- une quantité molaire de motifs 1,4 : 3,6-dianhydrohexitol (A) allant de 2,5 à 54 % mol ;
- une quantité molaire de motifs diol alicyclique (B) autre que les motifs 1,4 : 3,6-dianhydrohexitol (A) allant de 5 à 42,5 % mol ;
- une quantité molaire de motifs acide téréphtalique (C) allant de 45 à 55 % mol.

En fonction des applications et des propriétés recherchées concernant la pièce injectée, le polyester thermoplastique peut être un polyester thermoplastique semi-cristallin ou un polyester thermoplastique amorphe.

Par exemple, si pour certaines applications on cherche à obtenir une pièce injectée pouvant être opaque et présentant des propriétés mécaniques augmentées, le polyester thermoplastique peut être semi-cristallin et comprend ainsi :
- une quantité molaire de motifs 1,4 : 3,6-dianhydrohexitol (A) allant de 2,5 à 14%mol;
- une quantité molaire de motifs diol alicyclique (B) autre que les motifs 1,4 : 3,6-dianhydrohexitol (A) allant de 31 à 42,5 % mol ;
- une quantité molaire de motifs acide téréphtalique (C) allant de 45 à 55 % mol.

D'une manière avantageuse, lorsque le polyester thermoplastique est semi-cristallin il présente un ratio molaire (A)/[(A)+(B)] de 0,10 à 0,25.

Au contraire, lorsque la transparence de la pièce injectée est recherchée le polyester thermoplastique peut être amorphe et comprend ainsi :
- une quantité molaire de motifs 1,4 : 3,6-dianhydrohexitol (A) allant de 16 à 54 % mol ;
- une quantité molaire de motifs diol alicyclique (B) autre que les motifs 1,4 : 3,6-dianhydrohexitol (A) allant de 5 à 30 % mol ;
- une quantité molaire de motifs acide téréphtalique (C) allant de 45 à 55 % mol.

D'une manière avantageuse, lorsque le polyester thermoplastique est amorphe il présente un ratio molaire (A)/[(A)+(B)] de 0,35 à 0,65.

L'homme de l'art peut aisément trouver les conditions d'analyse pour déterminer les quantités en chacun des motifs du polyester thermoplastique. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques présentent une température de transition vitreuse allant de 85 à 200°C, par exemple de 90 à 115°C s'ils sont semi-cristallins et par exemple de 116°C à 200 °C s'ils sont amorphes.

Les températures de transition vitreuse et de fusion sont mesurées par les méthodes classiques, notamment en utilisant la calorimétrie différentielle à balayage (DSC) en utilisant une vitesse de chauffe de 10°C/min. Le protocole expérimental est détaillé dans la partie exemples ci-après.

Les polyesters thermoplastiques utilisés selon l'invention, lorsqu'ils sont semi-cristallins, présentent une température de fusion allant de 210 à 295°C, par exemple de 240 à 285 °C.

Avantageusement, lorsque le polyester thermoplastique est semi-cristallin il présente une chaleur de fusion supérieure à 10 J/g, de préférence supérieure à 20 J/g, la mesure de cette chaleur de fusion consistant à faire subir à un échantillon de ce polyester un traitement thermique à 170°C pendant 16 heures puis à évaluer la chaleur de fusion par DSC en chauffant l'échantillon à 10°C/min.

Le polyester thermoplastique utilisé selon l'invention présente notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution dudit polyester thermoplastique utilisé selon l'invention est supérieure à 50 mL/g et de préférence inférieure à 150 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit ci-après.

Le caractère semi-cristallin ou amorphe des polyesters thermoplastiques utilisés selon la présente invention se caractérise, après un traitement thermique de 16h à 170°C, par la présence ou non de raies de diffraction aux rayons X ou d'un pic de fusion endothermique en Analyse Calorimétrique Différentielle à Balayage (DSC). Ainsi, lorsqu'il y a la présence de raies de diffraction aux rayons X et d'un pic de fusion endothermique en Analyse Calorimétrique Différentielle à Balayage (DSC), le polyester thermoplastique est semi-cristallin, le cas contraire, il est amorphe.

Le polyester thermoplastique selon l'invention est donc utilisé pour la fabrication de pièces injectées.

La fabrication des pièces injectées peut être réalisée à partir de l'état fondu après polymérisation du polyester thermoplastique ou selon une alternative, le polyester thermoplastique peut être conditionné sous une forme facilement manipulable telle que des pellets ou des granulés avant d'être utilisé pour la fabrication de pièces injectées. D'une manière préférentielle, le polyester thermoplastique est conditionné sous forme de granulés, lesdits granulés étant avantageusement séchés avant fabrication des pièces injectées. Le séchage est réalisé de manière à obtenir des granulés présentant un taux d'humidité résiduelle inférieur à 300 ppm, préférentiellement inférieur à 250 ppm.

La fabrication des pièces injectées peut être réalisée selon les techniques connues de l'homme du métier. Par exemple, la fabrication peut être réalisée par injection, bi-injection, surmoulage, injection-compression ou encore par injection par assemblage dans le moule (en anglais « In-mold assembly » (IMA)). De préférence, la fabrication est réalisée par injection.

L'injection est une technique de mise en forme de matière thermoplastique qui se décompose généralement en quatre grandes étapes. La première étape de l'injection est une phase de plastification qui permet notamment de chauffer, d'homogénéiser et d'acheminer la matière plastique. Ensuite, vient une phase d'injection proprement dite de la matière plastique dans un moule fermé, ladite injection étant suivie d'une étape de refroidissement et enfin d'une étape d'éjection la pièce injectée ainsi fabriquée.

Selon un mode de réalisation particulier, un ou plusieurs polymères additionnels peuvent être utilisés en mélange avec le polyester thermoplastique pour la fabrication de pièces injectées.

Lorsqu'un polymère additionnel est utilisé, ce dernier peut par exemple être ajouté au moment de la fabrication de la pièce injectée par exemple par bi-injection, ou au moment de la préparation du polyester thermoplastique.

Le polymère additionnel peut être choisi parmi les photos résines, les photo polymères, les polyesters autres que le polyester selon l'invention, autres que les polyesters aromatiques, autres que les polyesters aliphatiques, autres que les polyesters éthers, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polysulfones, les polysulfone ethers, les polyéther cétone et les mélanges de ces polymères.

Le polymère additionnel peut également être un polymère permettant d'améliorer les propriétés au choc du polyester, notamment les polyoléfines fonctionnelles telles que les polymères et copolymères d'éthylène ou de propylène fonctionnalisés, des copolymères cœur-écorce ou des copolymères à bloc.

Un ou plusieurs additifs peuvent également être ajoutés au polyester thermoplastique lors de la fabrication de la pièce injectée afin de lui conférer des propriétés particulières.

Ainsi, à titre d'exemple d'additif, on peut citer les antioxydants, les charges ou les fibres de nature organique ou inorganique, nanométriques ou non, fonctionnalisées ou non. Il peut s'agir de silices, de zéolithes, de fibres ou de billes de verre, d'argiles, de mica, de titanates, de silicates, de graphite, de carbonate de calcium, de nanotubes de carbone, de fibres de bois, de fibres de carbone, de fibres de polymère, de protéines, de fibres cellulosiques, de fibres ligno-cellulosiques et d'amidon granulaire non déstructuré. Ces charges ou fibres peuvent permettre d'améliorer la dureté, la rigidité ou l'aspect de surface des pièces injectées.

L'additif peut également être choisi parmi des agents opacifiants, des colorants et des pigments. Ils peuvent être choisis parmi l'acétate de cobalt et les composés suivants : HS-325 Sandoplast^{®} RED BB (qui est un composé porteur d'une fonction azo également connu sous le nom Solvent Red 195), HS-510 Sandoplast^{®} Blue 2B qui est une anthraquinone, Polysynthren^{®} Blue R, et Clariant^{®} RSB Violet.

L'additif peut être également un agent de résistance aux UV comme par exemple des molécules type benzophénone ou benzotriazole, comme la gamme Tinuvin^{™} de BASF : tinuvin 326, tinuvin P ou le tinuvin 234 par exemple ou des amines encombrées comme la gamme Chimassorb^{™} de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit^{®} OP) ou comme la gamme des cyanurates mélaminés (par exemple les melapur^{™} : mélapur 200) ou encore des hydroxydes d'aluminium ou de magnésium.

Enfin, l'additif peut également être un agent démoulant ou encore un agent de résistance aux rayures tel que des dérivés de molécules hydrophobes par exemple les Incroslip^{™} ou Incromol^{™} de Croda.

Le polyester thermoplastique tel que précédemment défini présente bien des avantages pour la fabrication de pièces injectées.

En effet, grâce notamment au ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,10 et à une viscosité réduite en solution supérieure à 50 mL/g et de préférence inférieure à 150 mL/g, les polyesters thermoplastiques permettent d'obtenir des pièces injectées présentant des propriétés thermiques et mécaniques améliorées.

Plus particulièrement, les pièces injectées fabriquées à partir d'un polyester thermoplastique selon la présente invention possèdent une température de transition vitreuse et/ou une résistance aux chocs améliorées ce qui permet ainsi d'élargir des domaines d'utilisation desdites pièces injectées tout en fournissant des produits qualitatifs.

Les pièces injectées fabriquées à partir du polyester thermoplastique selon l'invention peuvent donc être utilisées dans des domaines d'application variés et ainsi revêtir une multitude d'aspect qui dépendra de l'utilisation finale de ladite pièce. Des exemples de pièces injectées sont notamment les articles pour enfants tels que les jouets, les pièces pour petit électroménager tels les bacs de réfrigérateur, les articles de cuisines ou encore des contenants alimentaires.

Un second objet de l'invention concerne un procédé de fabrication d'une pièce injectée, ledit procédé comprenant les étapes suivantes de :
a) Fourniture d'un polyester thermoplastique tel que défini ci-dessus,
b) Préparation de ladite pièce injectée à partir du polyester thermoplastique obtenu à l'étape précédente.

L'étape de préparation peut être réalisée par les méthodes connues de l'homme du métier pour la fabrication de pièces injectées. Par exemple, l'étape de préparation peut être réalisée par injection, bi-injection, surmoulage, injection-compression ou encore par injection par assemblage dans le moule (en anglais « In-mold assembly » (IMA)). De préférence, la préparation est réalisée par injection.

Un troisième objet de l'invention concerne une pièce injectée fabriquée à partir du polyester thermoplastique décrit précédemment. La pièce injectée peut également comprendre un ou plusieurs polymères additionnels ainsi qu'un ou plusieurs additifs.

Le polyester thermoplastique particulièrement adapté pour l'obtention d'une pièce injectée peut être préparé par un procédé de synthèse comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique
- une étape d'introduction dans le réacteur d'un système catalytique ;
- une étape de polymérisation desdits monomères pour former le polyester, ladite étape consistant en :
   ▪ un premier stade d'oligomérisation pendant lequel le milieu réactionnel est agité sous atmosphère inerte à une température allant de 265 à 280°C, avantageusement de 270 à 280°C, par exemple 275°C ;
   ▪ un second stade de condensation des oligomères pendant lequel les oligomères formés sont agités sous vide à une température allant de 278 à 300°C afin de former le polyester, avantageusement de 280 à 290°C, par exemple 285°C ;
- une étape de récupération du polyester thermoplastique.

Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade. Préalablement au premier stade d'oligomérisation, une étape de désoxygénation des monomères est préférentiellement réalisée. Elle peut se faire par exemple une fois les monomères introduits dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80°C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1 bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité conformément à l'utilisation selon l'invention pour la fabrication de pièces injectées.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification, un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US2011282020A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1882712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox^{®} 0 3, Hostanox^{®} 0 10, Hostanox^{®} 0 16, Ultranox^{®} 210, Ultranox^{®}276, Dovernox^{®} 10, Dovernox^{®} 76, Dovernox^{®} 3114, Irganox^{®} 1010, Irganox^{®} 1076 ou un phosphonate tel que l'Irgamod^{®} 195. L'anti-oxydant secondaire peut être des composés phosphorés trivalents tels que Ultranox^{®} 626, Doverphos^{®} S-9228, Hostanox^{®} P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Enfin, le procédé comprend une étape de récupération du polyester à l'issue de l'étape de polymérisation. Le polyester thermoplastique ainsi récupéré peut ensuite être conditionné sous une forme facilement manipulable telle que des pellets ou des granulés avant d'être utilisé pour la fabrication de pièces injectées.

Selon une variante du procédé de synthèse, lorsque le polyester thermoplastique est semi-cristallin, une étape d'augmentation de masse molaire peut être réalisée après l'étape de récupération du polyester thermoplastique.

L'étape d'augmentation de masse molaire est réalisée par post-polymérisation et peut consister en une étape de polycondensation à l'état solide (PCS) du polyester thermoplastique semi-cristallin ou en une étape d'extrusion réactive du polyester thermoplastique semi-cristallin en présence d'au moins un allongeur de chaîne.

Ainsi, selon une première variante du procédé de fabrication, l'étape de post-polymérisation est réalisée par PCS.

La PCS est généralement réalisée à une température comprise entre la température de transition vitreuse et la température de fusion du polymère. Ainsi, pour réaliser la PCS, il est nécessaire que le polymère soit semi-cristallin. De préférence, ce dernier présente une chaleur de fusion supérieure à 10 J/g, de préférence supérieure à 20 J/g, la mesure de cette chaleur de fusion consistant à faire subir à un échantillon de ce polymère de viscosité réduite en solution plus faible un traitement thermique à 170°C pendant 16 heures puis à évaluer la chaleur de fusion par DSC en chauffant l'échantillon à 10 K/min.

Avantageusement, l'étape de PCS est réalisée à une température allant de 190 à 280°C, de préférence allant de 200 à 250°C, cette étape devant impérativement être réalisée à une température inférieure à la température de fusion du polyester thermoplastique semi-cristallin.

L'étape de PCS peut se faire en atmosphère en inerte, par exemple sous azote ou sous argon ou sous vide.

Selon une deuxième variante du procédé de fabrication, l'étape de post-polymérisation est réalisée par extrusion réactive du polyester thermoplastique semi-cristallin en présence d'au moins un allongeur de chaîne.

L'allongeur de chaîne est un composé comprenant deux fonctions susceptibles de réagir, en extrusion réactive, avec des fonctions, alcool, acide carboxylique et/ou ester d'acide carboxylique du polyester thermoplastique semi-cristallin. L'allongeur de chaîne peut par exemple être choisi parmi les composés comprenant deux fonctions isocyanate, isocyanurate, lactame, lactone, carbonate, époxy, oxazoline et imide, lesdites fonctions pouvant être identiques ou différentes. L'allongement de chaîne du polyester thermoplastique peut être effectué dans tous les réacteurs aptes à mélanger un milieu très visqueux avec une agitation suffisamment dispersive pour assurer une bonne interface entre la matière fondue et le ciel gazeux du réacteur. Un réacteur particulièrement adapté à cette étape de traitement est l'extrusion.

L'extrusion réactive peut être réalisée dans une extrudeuse de tout type, notamment une extrudeuse mono-vis, une extrudeuse bi-vis co-rotatives ou une extrudeuse bi-vis contrarotatives. Toutefois, on préfère réaliser cette extrusion réactive en utilisant une extrudeuse co-rotative.

L'étape d'extrusion réactive peut se faire en :
- introduisant le polymère dans l'extrudeuse de manière à faire fondre ledit polymère ;
- puis introduisant dans le polymère fondu l'allongeur de chaîne ;
- puis faisant réagir dans l'extrudeuse le polymère avec l'allongeur de chaîne ;
- puis récupérant le polyester thermoplastique semi-cristallin obtenu à l'étape d'extrusion.

Lors de l'extrusion, la température à l'intérieur de l'extrudeuse est réglée de manière à être à supérieure à la température de fusion du polymère. La température à l'intérieur de l'extrudeuse peut aller de 150 à 320°C.

Le polyester thermoplastique semi-cristallin obtenu après l'étape d'augmentation de masse molaire est récupéré et peut ensuite être conditionné sous une forme facilement manipulable telle que des pellets ou des granulés avant d'être mis de nouveau en forme pour les besoins de la fabrication de pièces injectées.

L'invention sera mieux comprise à l'aide des exemples et figures ci-après qui se veulent purement illustratifs.

### Exemples

Les propriétés des polymères ont été étudiées avec les techniques suivantes :

### Viscosité réduite en solution

La viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : L'échantillon est tout d'abord chauffé sous atmosphère d'azote dans un creuset ouvert de 10 à 320°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage.

De même la détermination de l'enthalpie de fusion (aire sous la courbe) est réalisée au premier chauffage.

Pour les exemples illustratifs présentés ci-dessous les réactifs suivants ont été utilisés : 1,4-Cyclohexane dimethanol (pureté 99%, mélange d'isomères cis et trans) Isosorbide (pureté >99,5%) Polysorb^{®} P de Roquette Frères
Acide téréphtalique (pureté 99+%) de Acros
Irganox^{®} 1010 de BASF AG
Dibutylétain oxyde (pureté 98%) de Sigma Aldrich

### Exemple 1 : Préparation d'un polyester thermoplastique amorphe et utilisation pour la fabrication d'une pièce injectée.

### A : Polymérisation

Dans un réacteur de 7,5L sont ajoutés 859 g (6 mol) de 1,4-cyclohexanedimethanol, 871 g (6 mol) d'isosorbide, 1800 g (10.8 mol) d'acide téréphtalique, 1,5 g d'Irganox 1010 (anti-oxydant) et 1,23 g de dibutylétainoxyde (catalyseur). Pour extraire l'oxygène résiduel des cristaux d'isosorbide, 4 cycles vide-azote sont effectués une fois la température du milieu réactionnel comprise entre 60 et 80°C.

Le mélange réactionnel est ensuite chauffé à 275°C (4°C/min) sous 6,6 bars de pression et sous agitation constante (150 tr/min). Le taux d'estérification est estimé à partir de la quantité de distillat collectée. Puis, la pression est réduite à 0,7 mbar en 90minutes selon une rampe logarithmique et la température amenée à 285°C.

Ces conditions de vide et de température ont été maintenues jusqu'à obtenir une augmentation de couple de 10 Nm par rapport au couple initial. Enfin, un jonc de polymère est coulé par la vanne de fond du réacteur, refroidi dans un bac d'eau thermo-régulé à 15°C et découpé sous forme de granulés d'environ 15 mg.

La résine ainsi obtenue a une viscosité réduite en solution de 54.9 mL/g.

L'analyse par RMN 1H du polyester montre que le polyester final contient 44 mol% d'isosorbide par rapport aux diols.

En ce qui concerne les propriétés thermiques (relevées au second chauffage), le polyester présente une température de transition vitreuse (Tg) de 125°C.

### B : Mise en forme par injection

Les granulés de polyester thermoplastique obtenus à l'étape précédente sont séchés sous vide à 110°C afin d'atteindre des taux d'humidité résiduelle inférieurs à 300 ppm, dans cet exemple, la teneur en eau des granulés est de 210 ppm.

Les granulés, maintenus en atmosphère sèche sont introduits dans la trémie de la presse à injecter. L'injection s'effectue sur une presse Engel VICTORY 80.

Les granulés sont injectés sous forme de plaque de 2mm d'épaisseur et les paramètres d'injection sont regroupés dans le tableau 1 ci-dessous :

**Tableau 1**

| ***Paramètre*** | ***Unité**s* | ***Valeurs*** |
|---|---|---|
| Température du plastique à l'état fondu (buse / fourreau) | °C | 270/265/265/260 |
| Température du moule | °C | 50 |
| Vitesse d'injection | mm/s | 80 |
| Pression de maintien | bars | 23 |
| Durée du maintien | s | 15 |
| Temps de refroidissement | s | 15 |
| Temps de cycle | s | 40 |

Les pièces injectées ainsi obtenues présentent une Tg élevée, ce qui permet leur utilisation dans des applications où la tenue thermique est importante.

Ainsi, lorsque les polyesters thermoplastiques selon l'invention sont amorphes, ils sont particulièrement adaptés pour la fabrication de pièces injectées.

### Exemple 2 : Préparation d'un polyester semi-cristallin et utilisation pour la fabrication d'une pièce injectée.

### A : polymérisation

Dans un réacteur de 7,5L sont ajoutés 1432 g (9,9 mol) de 1,4-cyclohexanedimethanol, 484 g (3,3 mol) d'isosorbide, 2000 g (12,0 mol) d'acide téréphtalique, 1,65 g d'Irganox 1010 (anti-oxydant) et 1,39 g de dibutylétainoxyde (catalyseur). Pour extraire l'oxygène résiduel des cristaux d'isosorbide, 4 cycles vide-azote sont effectués une fois la température du milieu réactionnel à 60°C.

Le mélange réactionnel est ensuite chauffé à 275°C (4°C/min) sous 6,6 bars de pression et sous agitation constante (150 tr/min) jusqu'à obtenir un taux d'estérification de 87% (estimé à partir de la masse de distillat collectée). Puis, la pression est réduite à 0,7 mbar en 90minutes selon une rampe logarithmique et la température amenée à 285°C.

Ces conditions de vide et de température ont été maintenues jusqu'à obtenir une augmentation de couple de 12,1 Nm par rapport au couple initial.

Enfin, un jonc de polymère est coulé par la vanne de fond du réacteur, refroidi dans un bac d'eau thermo-régulé à 15°C et découpé sous forme de granulés d'environ 15 mg.

La résine ainsi obtenue a une viscosité réduite en solution de 80,1 mL/g.

L'analyse par RMN 1H du polyester montre que le polyester final contient 17,0 mol% d'isosorbide par rapport aux diols.

En ce qui concerne les propriétés thermiques, le polymère présente une température de transition vitreuse de 96°C, une température de fusion de 253°C avec une enthalpie de fusion de 23,2 J/g.

Le polyester est utilisé dans une étape de post condensation à l'état solide.

Pour ce faire, les granulés sont cristallisés pendant 2h en étuve sous vide à 170°C.

L'étape de post condensation en phase solide est ensuite réalisée sur 10 kg de ces granulés durant 20h à 210°C sous flux d'azote (1500 l/h) pour augmenter la masse molaire. La résine après condensation en phase solide présente une viscosité réduite en solution de 103,4 mL/g.

### B : Mise en forme par injection

Les granulés de polyester obtenus à l'étape précédente de polymérisation sont séchés sous vide à 150°C afin d'atteindre des taux d'humidité résiduelle inférieurs à 300 ppm, dans cet exemple, la teneur en eau des granulés est de 127 ppm.

Les granulés maintenus en atmosphère sèche sont introduits dans la trémie de la presse à injecter.

L'injection s'effectue sur une presse Engel VICTORY 80 et les granulés sont injectés sous forme de barreaux de 4mm d'épaisseur

Les paramètres d'injection utilisés sont présentés dans le tableau 2 ci-dessous :

| **Paramètres** | **Unités** | **Valeurs** |
|---|---|---|
| Température du plastique à l'état fondu (buse / fourreau) | °C | 285/280/280/270 |
| Température du moule | °C | 50 |
| Vitesse d'injection | mm/s | 80 |
| Pression de maintien | bars | 40 |
| Durée du maintien | s | 20 |
| Temps de refroidissement | s | 15 |

Les barreaux ainsi obtenus présentent une très bonne résistance aux chocs, à température ambiante comme à froid (-30°C).

Ainsi, lorsque les polyesters thermoplastiques selon l'invention sont semi-cristallins ils se révèlent également particulièrement avantageux pour la fabrication de pièces injectées.

## Revendications

1. Utilisation d'un polyester thermoplastique pour la fabrication de pièces injectées, ledit polyester comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
dans lequel le ratio molaire (A)/[(A)+(B)] étant d'au moins 0,10 et d'au plus 0,75 ; ledit polyester étant exempt de motifs diol aliphatique non cyclique et dont la viscosité réduite en solution mesurée à 25°C dans un mélange équimassique phénol : ortho-dichlorobenzène avec une concentration à 5 g/L de polyester, est supérieure à 50 mL/g ;
lesdites pièces injectées ainsi obtenues étant exemptes d'un polymère supplémentaire choisi parmi les polyesters aromatiques, les polyesters aliphatiques, les polyesters éthers, les polyamides, les polycarbonates, les polyéthers bloc amide et les polyuréthanes ;
ou
celles-ci ne sont pas choisies parmi les contenants d'aérosol ou les corps creux ou les corps creux bi-étirés.

2. Utilisation selon la revendication 1, **caractérisée en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

3. Utilisation selon l'une des revendications 1 ou 2, **caractérisée en ce que** le 1,4 : 3,6-dianhydrohexitol (A) est l'isosorbide.

4. Utilisation selon l'une des revendications 1 à 3, **caractérisée en ce que** le ratio molaire (motif 3,6-dianhydrohexitol (A) + motif diol alicyclique (B) autre que les motifs 1,4 : 3,6-dianhydrohexitol (A))/( motif acide téréphtalique (C)) est de 1,05 à 1,5.

5. Utilisation selon l'une des revendications 1 à 4, **caractérisée en ce que** la pièce injectée comprend un ou plusieurs additifs.

6. Pièces injectées comprenant un polyester thermoplastique comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
dans lequel le ratio molaire (A)/[(A)+(B)] étant d'au moins 0,10 et d'au plus 0,75 ; ledit polyester étant exempt de motifs diol aliphatique non cyclique et dont la viscosité réduite mesurée à 25°C dans un mélange équimassique phénol : ortho-dichlorobenzène avec une concentration à 5 g/L de polyester, est supérieure à 50 mL/g
lesdites pièces injectées étant exemptes d'un polymère supplémentaire choisi parmi les polyesters aromatiques, les polyesters aliphatiques, les polyesters éthers, les polyamides, les polycarbonates, les polyéthers bloc amide et les polyuréthanes ; ou
celles-ci ne sont pas choisies parmi les contenants d'aérosol ou les corps creux ou les corps creux bi-étirés.

7. Pièces injectées selon la revendication 6, **caractérisée en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

8. Pièces injectées selon l'une des revendications 6 ou 7, **caractérisée en ce que** le 1,4 : 3,6-dianhydrohexitol (A) est l'isosorbide.

9. Pièces injectées selon l'une des revendications 6 à 8, **caractérisée en ce que** le ratio molaire (motif 3,6-dianhydrohexitol (A) + motif diol alicyclique (B) autre que les motifs 1,4 : 3,6-dianhydrohexitol (A))/( motif acide téréphtalique (C)) est de 1,05 à 1,5.

10. Pièces injectées selon l'une des revendications 6 à 9, **caractérisée en ce que** la pièce injectée comprend un ou plusieurs additifs.

11. Procédé de fabrication d'une pièce injectée comprenant les étapes suivantes de :
a) Fourniture d'un polyester thermoplastique comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] étant d'au moins 0,10 et d'au plus 0,75, ledit polyester étant exempt de motifs diol aliphatique non cyclique et dont la viscosité réduite en solution mesurée à 25°C dans un mélange équimassique phénol : ortho-dichlorobenzène avec une concentration à 5 g/L de polyester, est supérieure à 50 mL/g,
b) Préparation de ladite pièce injectée à partir du polyester thermoplastique obtenu à l'étape précédente
ladite pièce injectée ainsi obtenue étant exempte d'un polymère supplémentaire choisi parmi les polyesters aromatiques, les polyesters aliphatiques, les polyesters éthers, les polyamides, les polycarbonates, les polyéthers bloc amide et les polyuréthanes ; ou
celle-ci n'est pas choisie parmi un contenant d'aérosol ou un corps creux ou un corps creux bi-étiré.

12. Procédé de fabrication selon la revendication 11, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

13. Procédé de fabrication selon l'une des revendications 11 ou 12, **caractérisé en ce que** le 1,4 : 3,6-dianhydrohexitol (A) est l'isosorbide.

14. Procédé de fabrication selon l'une des revendications 11 à 13, **caractérisé en ce que** le ratio molaire (motif 3,6-dianhydrohexitol (A) + motif diol alicyclique (B) autre que les motifs 1,4 : 3,6-dianhydrohexitol (A))/( motif acide téréphtalique (C)) est de 1,05 à 1,5.

15. Procédé de fabrication selon l'une des revendications 11 à 14 **caractérisé en ce que** la pièce injectée comprend un ou plusieurs additifs.

## Patentansprüche

1. Verwendung eines thermoplastischen Polyesters zur Herstellung von Injektionsstücken, wobei der Polyester umfasst:
- wenigstens eine 1,4 : 3,6-Dianhydrohexitol-Einheit (A);
- wenigstens eine alicyclische Diol-Einheit (B), die von den 1,4 : 3,6-Dianhydrohexitol-Einheiten (A) verschieden ist;
- wenigstens eine Terephthalsäure-Einheit (C);
wobei das Molverhältnis (A)/[(A)+(B)] wenigstens 0,10 und höchstens 0,75 beträgt; wobei der Polyester frei von nicht-cyclischen aliphatischen DiolEinheiten ist und seine reduzierte Lösungsviskosität, gemessen bei 25°C in einer äquimassischen Phenol: Ortho-Dichlorbenzol-Mischung mit einer Konzentration von 5 g/l Polyester, größer als 50 ml/g ist;
wobei die so erhaltenen Injektionsstücke frei von einem zusätzlichen Polymer sind, das aus aromatischen Polyestern, aliphatischen Polyestern, Polyesterethern, Polyamiden, Polycarbonaten, Polyetherblockamiden und Polyurethanen gewählt ist; oder diese nicht aus Aerosolbehältern oder Hohlkörpern oder zweifach gestreckten Hohlkörpern gewählt sind.

2. Verwendung nach Anspruch 1, **dadurch gekennzeichnet, dass** das alicyclische Diol (B) ein Diol ist, das aus 1,4-Cyclohexandimethanol, 1,2-Cyclohexandimethanol, 1,3-Cyclohexandimethanol oder einer Mischung dieser Diole gewählt ist, stark bevorzugt 1,4-Cyclohexandimethanol.

3. Verwendung nach einem der Ansprüche 1 oder 2, **dadurch gekennzeichnet, dass** das 1,4 : 3,6- Dianhydrohexitol (A) Isosorbid ist.

4. Verwendung nach einem der Ansprüche 1 bis 3, **dadurch gekennzeichnet, dass** das Molverhältnis (3,6-Dianhydrohexitol-Einheit (A) + alicyclische Diol-Einheit (B), die von den 1,4 : 3,6-Dianhydrohexitol-Einheiten verschieden ist (A))/(Terephthalsäure-Einheit (C)) 1,05 bis 1,5 beträgt.

5. Verwendung nach einem der Ansprüche 1 bis 4, **dadurch gekennzeichnet, dass** das Injektionsstück ein oder mehrere Zusatzstoffe umfasst.

6. Injektionsstücke, die einen thermoplastischen Polyester umfassen, umfassend:
- wenigstens eine 1,4 : 3,6-Dianhydrohexitol-Einheit (A);
- wenigstens eine alicyclische Diol-Einheit (B), die von den 1,4 : 3,6-Dianhydrohexitol-Einheiten (A) verschieden ist;
- wenigstens eine Terephthalsäure-Einheit (C);
wobei das Molverhältnis (A)/[(A)+(B)] wenigstens 0,10 und höchstens 0,75 beträgt; wobei der Polyester frei von nicht-cyclischen aliphatischen DiolEinheiten ist und die reduzierte Viskosität, gemessen bei 25°C in einer äquimassischen Mischung aus Phenol : ortho-Dichlorbenzol mit einer Konzentration von 5 g/l Polyester größer als 50 ml/g ist, wobei die Injektionsstücke frei von einem zusätzlichen Polymer sind, das aus aromatischen Polyestern, aliphatischen Polyestern, Polyesterethern, Polyamiden, Polycarbonaten, Polyetherblockamiden und Polyurethanen gewählt ist; oder diese nicht aus Aerosolbehältern oder Hohlkörpern oder zweifach gestreckten Hohlkörpern gewählt sind.

7. Injektionsstücke nach Anspruch 6, **dadurch gekennzeichnet, dass** das alicyclische Diol (B) ein Diol ist, das aus 1,4-Cyclohexandimethanol, 1,2-Cyclohexandimethanol, 1,3-Cyclohexandimethanol oder einer Mischung dieser Diole gewählt ist, stark bevorzugt 1,4-Cyclohexandimethanol.

8. Injektionsstücke nach einem der Ansprüche 6 oder 7, **dadurch gekennzeichnet, dass** das 1,4 : 3,6-Dianhydrohexitol (A) Isosorbid ist.

9. Injektionsstücke nach einem der Ansprüche 6 bis 8, **dadurch gekennzeichnet, dass** das Molverhältnis (3,6-Dianhydrohexitol-Einheit (A) + alicyclische Diol-Einheit (B), die von den 1,4 : 3,6-Dianhydrohexitol-Einheiten verschieden ist (A)/(Terephthalsäure-Einheit (C)) 1,05 bis 1,5 beträgt.

10. Injektionsstücke nach einem der Ansprüche 6 bis 9, **dadurch gekennzeichnet, dass** das Injektionsstück einen oder mehrere Zusatzstoffe enthält.

11. Verfahren zur Herstellung eines Injektionsstücks, das die folgenden Schritte umfasst:
a) Bereitstellen eines thermoplastischen Polyesters, umfassend wenigstens eine 1,4 : 3,6-Dianhydrohexitol-Einheit (A), wenigstens eine alicyclische Diol-Einheit (B), die von den 1,4 : 3,6-Dianhydrohexitol-Einheiten (A) verschieden ist, wenigstens eine Terephthalsäure-Einheit (C), wobei das Molverhältnis (A)/[(A)+(B)] wenigstens 0,10 und höchstens 0,75 beträgt, wobei der Polyester frei von nicht-cyclischen aliphatischen Dioleinheiten ist und dessen reduzierte Lösungsviskosität, gemessen bei 25°C in einer äquimassischen Mischung Phenol : ortho-Dichlorbenzol mit einer Konzentration von 5 g/l Polyester größer als 50 ml/g ist,
b) Herstellen des Injektionsstücks aus dem im vorhergehenden Schritt erhaltenen thermoplastischen Polyester,
wobei das so erhaltene Injektionsstück frei von einem zusätzlichen Polymer ist, das aus aromatischen Polyestern, aliphatischen Polyestern, Polyesterethern, Polyamiden, Polycarbonaten, Polyetherblockamiden und Polyurethanen gewählt wird; oder dieses nicht aus einem Aerosolbehälter oder einem Hohlkörper oder einem zweifach gestreckten Hohlkörper gewählt wird.

12. Herstellungsverfahren nach Anspruch 11, **dadurch gekennzeichnet, dass** das alicyclische Diol (B) ein Diol ist, das aus 1,4-Cyclohexandimethanol, 1,2-Cyclohexandimethanol, 1,3-Cyclohexandimethanol oder einer Mischung dieser Diole gewählt wird, stark bevorzugt 1,4-Cyclohexandimethanol.

13. Herstellungsverfahren nach einem der Ansprüche 11 oder 12, **dadurch gekennzeichnet, dass** das 1,4 : 3,6-Dianhydrohexitol (A) Isosorbid ist.

14. Herstellungsverfahren nach einem der Ansprüche 11 bis 13, **dadurch gekennzeichnet, dass** das Molverhältnis (3,6-Dianhydrohexitol-Einheit (A) + alicyclische Diol-Einheit (B), die von den 1,4: 3,6-Dianhydrohexitol-Einheiten verschieden ist (A))/(Terephthalsäure-Einheit (C)) 1,05 bis 1,5 beträgt.

15. Herstellungsverfahren nach einem der Ansprüche 11 bis 14, **dadurch gekennzeichnet, dass** das Injektionsstück ein oder mehrere Zusatzstoffe enthält.

## Claims

1. The use of a thermoplastic polyester for producing injection-molded parts, said polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
wherein the (A)/[(A)+(B)] ratio is at least 0.10 and at most 0.75;
said polyester not containing any aliphatic non-cyclic diol units and the reduced solution viscosity (25°C; phenol (50%m):ortho-dichlorobenzene (50%m); 5 g/l of polyester) of said polyester being greater than 50 ml/g
said injection-molded parts being exempt from an additional polymer chosen from aromatic polyesters, aliphatic polyesters, ether polyesters, polyamide, polycarbonate, polyether bloc amides and polyurethane
and not being chosen among aerosol containers, hollow articles or biaxially stretched hollow articles.

2. The use as claimed in claim 1, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

3. The use as claimed in either of claims 1 and 2, **characterized in that** the 1,4:3,6-dianhydrohexitol (A) is isosorbide.

4. The use as claimed in one of claims 1 to 3, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

5. The use as claimed in one of claims 1 to 4, **characterized in that** the injection-molded part comprises one or more additives.

6. Injection-molded parts comprising a thermoplastic polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
wherein the (A)/[(A)+(B)] ratio is at least 0.10 and at most 0.75;
said polyester not containing any aliphatic non-cyclic diol units and the reduced solution viscosity (25°C; phenol (50%m):ortho-dichlorobenzene (50%m); 5 g/l of polyester) of said polyester being greater than 50 ml/g
said injection-molded parts being exempt from an additional polymer chosen from aromatic polyesters, aliphatic polyesters, ether polyesters, polyamide, polycarbonate, polyether bloc amides and polyurethane
and not being chosen among aerosol containers, hollow articles or biaxially stretched hollow articles.

7. The injection-molded parts as claimed in claim 6, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

8. The injection-molded parts as claimed in either of claims 6 and 7, **characterized in that** the 1,4:3,6-dianhydrohexitol (A) is isosorbide.

9. The injection-molded parts as claimed in one of claims 6 to 8, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

10. The injection-molded parts as claimed in one of claims 8 to 9, **characterized in that** the injection-molded part comprises one or more additives.

11. A process for producing an injection-molded part, comprising the following steps of:
a) provision of a thermoplastic polyester comprising at least one 1,4:3,6-dianhydrohexitol unit (A), at least one alicyclic diol unit (B) other than the 1,4:3,6-dianhydrohexitol units (A), at least one terephthalic acid unit (C), wherein the (A)/[(A)+(B)] ratio is at least 0.10 and at most 0.75, said polyester not containing any aliphatic non-cyclic diol units and the reduced solution viscosity (25°C; phenol (50%m):ortho-dichlorobenzene (50%m); 5 g/l of polyester) of said polyester being greater than 50 ml/g,
b) preparation of said injection-molded part from the thermoplastic polyester obtained in the preceding step
said injection-molded parts being exempt from an additional polymer chosen from aromatic polyesters, aliphatic polyesters, ether polyesters, polyamide, polycarbonate, polyether bloc amides and polyurethane
and not being chosen among aerosol containers, hollow articles or biaxially stretched hollow articles.

12. The production process as claimed in claim 11, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

13. The production process as claimed in either of claims 11 and 12, **characterized in that** the 1,4:3,6-dianhydrohexitol (A) is isosorbide.

14. The production process as claimed in one of claims 11 to 13, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

15. The production process as claimed in one of claims 11 to 14, **characterized in that** the injection-molded part comprises one or more additives.
